# EUROPÄISCHE PATENTSCHRIFT

(11) **EP 0 830 970 B1**
(45) Veröffentlichungstag und Bekanntmachung des Hinweises auf die Patenterteilung: **13.03.2002**
(21) Anmeldenummer: 97114129.6
(22) Anmeldetag: 16.08.1997
(51) Int. Cl.: B60N 2/06

(54) **Führungsschienenanordnung für einen in wählbaren Längslagen feststellbaren Sitz, insbesondere Kraftfahrzeugsitz**
Slide arrangement for seats, lockable in selectable longitudinal positions, in particular for automotive vehicle seats
Arrangement de glissières pour sièges, immobilisables dans des positions longitudinales sélectives, en particulier sièges de véhicules automobiles

(30) Priorität: 20.09.1996 DE 19638588
(43) Veröffentlichungstag der Anmeldung: 25.03.1998
(73) Patentinhaber: Keiper GmbH & Co., 42855 Remscheid (DE)
(72) Erfinder: Voss, Heinz, Dr.-Ing., 51375 Leverkusen (DE); Schüler, Rolf, Dipl.-Ing., 42579 Heiligenhaus (DE)
(74) Vertreter: Mentzel, Norbert, Dipl.-Phys.

(56) Entgegenhaltungen:
- EP-A- 0 665 383
- DE-A- 3 238 028
- DE-A- 3 323 431
- DE-A- 3 631 780
- DE-A- 3 836 248
- DE-A- 4 133 509
- DE-A- 4 438 950
- US-A- 3 926 397
- PATENT ABSTRACTS OF JAPAN vol. 015, no. 411 (M-1170), 21. Oktober 1991 & JP 03 169755 A (TACHI S CO LTD), 23. Juli 1991
- PATENT ABSTRACTS OF JAPAN vol. 096, no. 002, 29. Februar 1996 & JP 07 257239 A (IKEDA BUSSAN CO LTD), 9. Oktober 1995

## Beschreibung

Die Erfindung betrifft eine Führungsschienenanordnung für einen in wählbaren Längslagen feststellbaren Sitz, insbesondere Kraftfahrzeugsitz, die aus jeweils einer auf jeder Sitzlängsseite angeordneten, am Fahrzeugboden festgelegten Führungsschiene und jeweils einer gegenüber dieser verschiebbaren Laufschiene besteht, die einerseits auf Wälzkörpern einer unteren Laufbahn und andererseits über Kugeln an Führungsbahnen der Schienen abgestützt ist.

Eine Führungsschienenanordnung der eingangs genannten Art ist beispielsweise aus der DE 38 36 248 A1 bekannt. Bei dieser Lösung besteht die Führungsschiene aus einem C-förmigen Profilstück, dessen Steg waagerecht verläuft und dessen Schenkel senkrecht aufragen. Diese Führungsschiene weist an ihrem horizontal verlaufenden Steg benachbart zu ihren aufragenden Schenkeln jeweils eine Laufbahn auf, während der innenseitge obere Bereich eines jeden Schenkels eine Führungsbahn aufweist. Die in die Führungsschiene eingreifende Laufschiene ist kastenförmig konzipiert und weist beiderseits Seitenteile auf, die mit nach außen abgewinkelten Flanschen zwischen die unteren Laufbahnen und die oberen Führungsbahnen greifen und über Rollkörper an den Laufbahnen und Führungsbahnen abgestützt sind. Die mit dem Sitz verbundene Laufschiene stützt sich über die Rollkörper der unteren Laufbahnen an der Führungsschiene bei normaler Belastung infolge Schwerkraftwirkung ab. Wenn jedoch die Rückenlehne durch den Sitzbenutzer belastet wird, so stützt sich die Laufschiene an ihrem einen Ende über die Rollkörper an den unteren Laufbahnen der Führungsschiene ab, während das andere Ende der Laufschiene über die Rollkörper an den oberen Führungsbahnen der Führungsschiene abgestützt ist. Die auf die Laufbahnen und Führungsbahnen einwirkenden Kräfte aus dieser Belastung können beträchtlich sein und zum Eindrücken kleiner Dellen in Laufbahnen bzw. Führungsbahnen führen, was in Fachkreisen als Brinellieren bekannt ist. Diese bleibenden Verformungen in den Lauf- und Führungsbahnen können zu einem Hemmnis der Verschiebebewegung der Laufschiene gegenüber der Führungsschiene werden.

Gleiche Verhältnisse stellen sich auch bei der Lösung gemäß der DE 41 33 509 A1 ein. Dort ist es allerdings so wie in der Regel üblich, daß in den unteren Laufbahnen Rollkörper angeordnet sind, deren Durchmesser beträchtlich größer ist als der Durchmesser der in den oberen Führungsbahnen angeordneten Rollkörper. Dabei können die Rollkörper in den unteren Führungsbahnen als Rolle bzw. Walzen ausgebildet sein, während die in den oberen Führungsbahnen angeordneten Rollkörper in aller Regel von im Durchmesser kleineren Kugeln gebildet sind. Damit ist die Gefahr des Brinellierens vor allen Dingen bei der Lösung gemäß der DE 41 33 509 A1 in den oberen Führungsbahnen gegeben.

Das bekannte Dokument EP 0 665 383 A1 beschreibt eine Teleskopschiene aus Aluminium-Strangpreßprofilen mit 2 Kugelführungsbahnen. Die in den Kugelführungsbahnen verlaufenden Kugeln werden durch Kunststoffstäbe auf Distanz gehalten. Diese Distanzstücke sind im Durchmesser kleiner als die Kugeln, um das Abrollen nicht zu behindern. Der Kunststoff der Distanzstücke ist so gewählt, daß eine Selbstschmierung der Kugeln gegeben ist. Eine solche Aluminium-Teleskopschiene ist nicht als Bindeglied zwischen Fahrzeugssitz und Fahrzeugboden einsetzbar. Die Kunststoffdistanzstücke sind auch nicht geeignet, auftretenden Belastungen vor Überschreitung der Elastizitätsgrenze bei Kugeln und Führungsbahnen aufzunehmen.

Aufgabe der Erfindung ist es, bei Führungsschienenanordnungen der eingangs genannten Art eine bleibende Verformung ihrer Lauf- bzw. Führungsbahnen durch Eindrücken von Dellen infolge auftretender Belastung zu verhindern. Diese Aufgabe ist erfindungsgemäß gelöst, indem im vorderen und/oder hinteren Bereich wenigstens einer Führungsbahn auf jeder Sitzlängsseite jeweils ein Paar von Kugeln angeordnet ist, zwischen denen ein Formstück mit einem gegenüber dem Durchmesser der Kugeln so geringfügig kleineren Durchmesser plaziert ist, daß infolge belastungsbedingter, elastischer Verformung von Kugeln und Führungsbahn das Formstück vor Überschreitung der Elastizitätsgrenze zum Tragen kommt. Es ist jedoch keinesfalls zwingend nur eine Kugel vor und eine Kugel hinter dem Formstück anzuordnen, vielmehr können mehrere Kugeln vor und auch mehrere Kugeln hinter dem Formstück vorhanden sein. Darüber hinaus lassen sich statt Kugeln auch Wälzkörper anderer Formgebung verwenden, wenn die Lauf- und/oder Führungsbahn zur Aufnahme der betreffenden Gestalt der Wälzkörper geformt ist. Wesentlich ist die Abstimmung der Durchmesser von Wälzkörpern und Formstück aufeinander, die anders ausgedrückt derart zu sein hat, daß durch elastische Verformung der Kugeln und ihrer Bahnen vor dem Erreichen der Plastizitätsgrenze das Formstück zum Tragen kommt. Im Bereich normaler Beanspruchung werden die Kräfte von den Wälzkörpern alleine aufgenommen, so daß nur geringe Verstellkräfte durch die Wälzlagerung realisiert werden. Bei höherer Belastung der Lagerstelle, die bei Stoß- oder Kippbeanspruchung durch Belastung der Lehne infolge Abstützung des Sitzbenutzers oder des Fondbenutzers oder durch die Gurtbelastung an der Rückenlehne auftreten, kommt dann das Formstück in der Lauf- bzw. Führungsbahn zur Anlage, so daß die auftretenden Kräfte infolge Flächenvergrößerung mit daher gleichwohl geringer Flächenpressung auf die Bahnen der Führungsschienenanordnung übertragen werden.

Bei der Verwendung von Kugeln in den Lauf- bzw. Führungsbahnen läßt sich als Formstück vorteilhaft eine mit ihrer Achse in Längsrichtung der Lauf-bzw. Führungsbahn erstreckende Walze einsetzen. Dabei mag der Durchmesser des Formstücks oder der Walze dem 0,900 bis 0,999, vorzugsweise 0,970 bis 0,999-fachen des Durchmessers der Kugeln entsprechen.

Zur Definierung der Abstützstellen mag vorteilhaft jedes Paar von Kugeln mit der dazwischen angeordneten Walze sowohl im hinteren Bereich als auch im vorderen Bereich der Lauf- bzw. Führungsschiene in axialer Richtung angeordnet sein. Dabei sind an der Führungsschiene Anschläge vor dem vorderen und hinteren Kugelpaar angeordnet. Diese Anschläge können vorzugsweise durch in die Schienen im Bereich ihrer Bahnen eingepreßte Sicken gebildet sein.

Nach einem anderen Ausgestaltungsmerkmal der Erfindung ist es auch denkbar, daß die abstandsweise hintereinander in einer Bahn angeordneten Paare von Kugeln mit der je dazwischen plazierten Walze in Endausschnitten einer in der Führungsbahn angeordneten Distanzlamelle fixiert sind. Vorteilhaft weist jede in eine Führungsschiene eingeschobene Laufschiene zusammen mit der Führungsschiene zwei Führungsbahnen auf, wobei jede Führungsbahn von einer oberen, ausgerundeten Innenecke der Führungsschiene und einem aufragenden Schenkel der Laufschiene gebildet ist, und der Schenkel an seinem freien Ende eine dem Durchmesser der Kugel angepaßte ausgerundete Rückprägung aufweist.

Die Erfindung ist in zwei Ausführungsbeispielen auf der Zeichnung dargestellt und wird anhand dieser Beispiele nachfolgend näher erläutert. Es zeigen:
- Fig. 1: die Führungsschienenanordnung einer Sitzlängsseite in einer Seitenansicht, die jedoch teilweise aufgebrochen im Längsschnitt dargestellt ist, wobei sich die Laufschiene gegenüber der Führungsschiene in ihrer zurückgeschobenen Lage befindet,
- Fig. 2: die aus Fig. 1 ersichtliche Führungsschienenanordnung in einem Querschnitt nach der Linie II - II von Fig. 1,
- Fig. 3: die Führungsbahn der Führungsschienenanordnung in einem das Kugelpaar mit dazwischen angeordnetem Formstück aufweisenden Bereich in einem Längsschnitt nach der Linie III - III von Fig. 2,
- Fig. 4: die aus Fig. 2 und 3 ersichtliche Führungsschienenanordnung in einer Draufsicht im Halbschnitt mit einem Paar von Kugeln und dazwischen angeordnetem Formstück in einem diese aufweisenden Längenbereich,
- Fig. 5: ein weiteres Ausführungsbeispiel einer Führungsschienenanordnung in einer zu Fig. 2 analogen Schnittdarstellung.

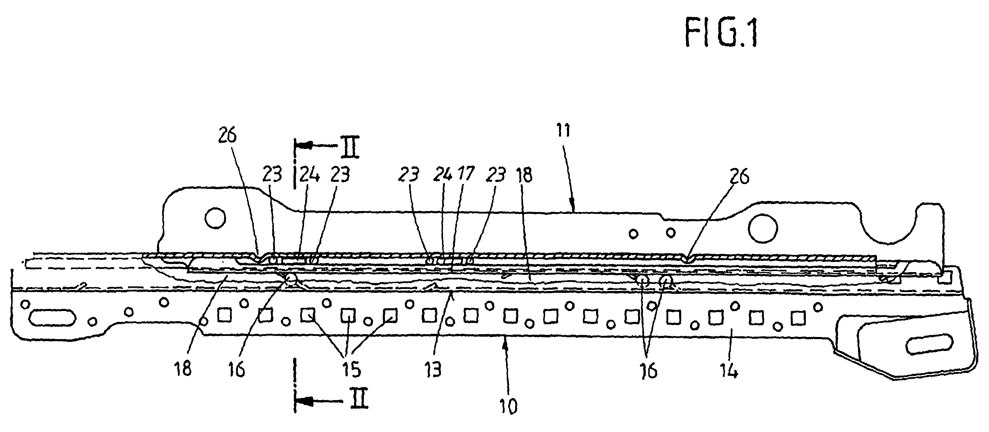

Die aus den Fig. 1 bis 4 ersichtliche Führungsschienenanordnung besteht aus einer mit dem Boden des Kraftfahrzeuges verbindbaren Führungsschiene 10 und einer darin längsverschiebbar angeordneten Laufschiene 11. Die Führungsschiene 10 weist einen im wesentlichen C-förmigen Querschnitt auf, der an seiner Unterseite geschlossen und an seiner Oberseite zum Durchtritt der Laufschiene 11 offen ist, und an dieser Oberseite zum Innenraum der Führungsschiene weisende, abgewinkelte Anlageleisten 12 aufweist. Vom Boden 13 der C-förmigen Führungsschiene ragen nach unten weisende Schenkel 14 ab, die einerseits durch im gleichmäßig angeordneten Abstand hintereinander angeordnete Löcher 15 eine Zahnreihe bilden, mit deren Hilfe über eine nicht dargestellte Sperrvorrichtung die Laufschiene 11 gegenüber der Führungsschiene 10 festsetzbar ist. An der Innenseite des Bodens 13 der C-förmigen Führungsschiene befinden sich Rollen 16, auf denen sich die in das Innere der Führungsschiene eingreifende Laufschiene 11 mit unterseitigen Laufstegen 17 abstützt. Die Innenseite des Bodens 13 der Führungsschiene 10 bildet zusammen mit der Unterseite der Laufstege 17 die Laufbahn 18 für die eine Wälzlagerung darstellenden Rollen 16.

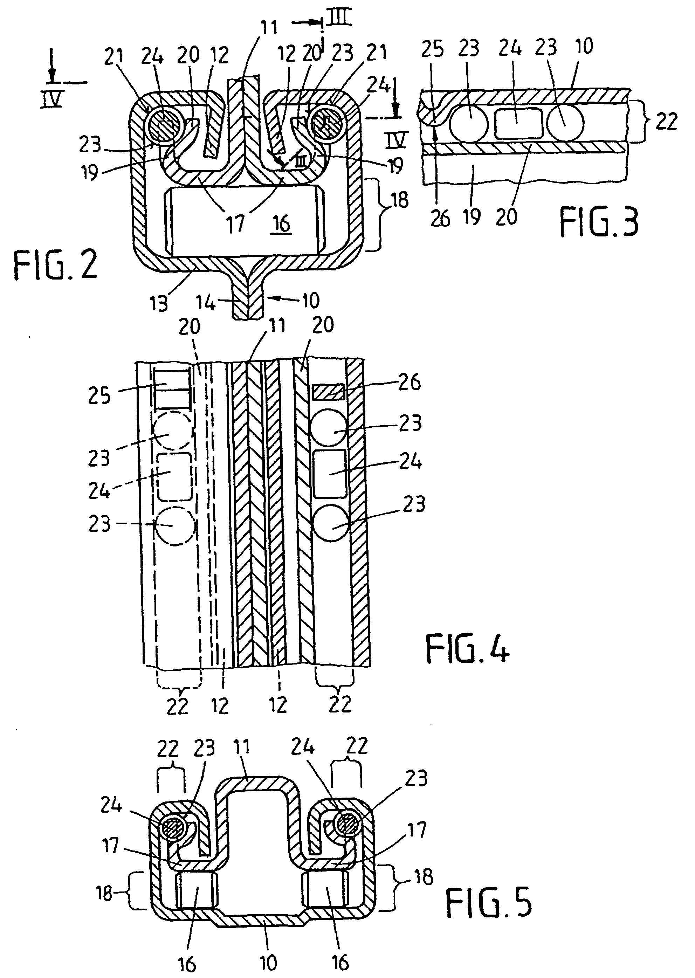

Die äußeren Enden der Laufstege 17 sind als aufragende Schenkel 19 nach oben gebogen und weisen über einen Längenbereich jeweils eine etwa viertelkreisförmige Rückprägung 20 auf. Die ebenfalls viertelkreisförmig ausgerundeten, oberen Innenecken 21 der Führungsschiene 10 bilden zusammen mit den Außenseiten der Rückprägung 20 jeweils eine Führungsbahn 22, welche bei dem dargestellten Ausführungsbeispiel ein Paar von Kugeln 23 aufnimmt, zwischen denen ein Formstück 24 beispielsweise in Form einer zylindrischen Walze angeordnet ist. Während die Kugeln 23 die Führungsbahn 22 ausfüllen, ist der Durchmesser der Walze 24 geringfügig kleiner als der Durchmesser der Kugeln 23. Vor und in entsprechendem Abstand hinter dem die Walze 24 einschließenden Paar von Kugeln 23 ist bei dem dargestellten Ausführungsbeispiel - wie aus den Fig. 3 und 4 entnommen werden kann - durch Einprägen der oberen Wandung der Führungsschiene 10 eine einen Anschlag 26 bildende Sicke 25 eingeprägt.

Zur Verdeutlichung des Durchmesserunterschiedes zwischen der Walze 24 und den Kugeln 23 ist zwischen der Walze 24 und der Führungsbahn 22 ein Spalt eingezeichnet, der in der Praxis so nicht sichtbar ist, weil der Durchmesser der Walze 24 0,900 bis 0,999, vorzugsweise 0,970 bis 0,999 mal dem Durchmesser der Kugeln 23 groß ist.

Aus Fig. 5 ist eine andere Führungsschienenanordnung zu entnehmen, bei der die Profilierung der Führungsschiene 10 und der Laufschiene 11 modifiziert ist. Im Gegensatz zu der aus Fig. 2 ersichtlichen Ausführungsform sind bei der aus Fig. 5 zu entnehmenden Führungsschienenanordnung zwei Laufbahnen 18 vorhanden, da die beiden Laufstege 17 jeder für sich von einer eigenen Rolle 16 an der inneren Oberfläche des Bodens der C-förmigen Führungsschiene 10 abgestützt sind. Allerdings sind auch bei dieser Ausführungsform zwei Führungsbahnen 22 vorhanden, die ebenso wie bei dem zuvor beschriebenen Ausführungsbeispiel jeweils im vorderen und im hinteren Bereich der Führungsschienenanordnung jeweils ein Paar von Kugeln 23 mit einer dazwischen angeordneten Walze 24 aufnehmen.

Wie bereits erwähnt, ist die Erfindung nicht allein auf die dargestellten und vorbeschriebenen Ausführungsformen beschränkt, sondern es sind noch mancherlei Änderungen und andere Ausgestaltungen des Erfindungsgegenstandes denkbar. So kann beispielsweise die Fixierung der Paare von Kugeln 23 mit den dazwischen angeordneten Walzen 24 erfolgen, indem beispielsweise in den Führungsbahnen 22 Stablamellen angeordnet sind, die an ihren entsprechenden Endbereichen Ausschnitte zur Aufnahme der Kugelpaare aufweisen. Darüber hinaus können im jeweiligen Lagerbereich auch mehr als zwei Kugeln angeordnet sein und es ist ferner denkbar das als Walze 24 gestaltete Formstück anders zu gestalten. So ist beispielsweise auch eine tonnenförmige Form des Formstücks 24 denkbar. Ferner könnte auch in der Laufbahn 18 statt der aus den Fig. ersichtlichen Rollen 16 Kugeln 23 angeordnet sein, wenn die Laufbahn 18 dazu passend gestaltet ist. Bei der Verwendung von Kugeln mit relativ kleinem Durchmesser in der Laufbahn 18 würden dann dort ebenfalls zwischen den Kugeln Formstücke 24 angeordnet sein.

### Bezugszeichenliste

- 10: Führungsschiene
- 11: Laufschiene
- 12: Anlageleiste, an 10
- 13: Boden
- 14: Schenkel
- 15: Loch
- 16: Rolle
- 17: Laufsteg
- 18: Laufbahn
- 19: Schenkel
- 20: Rückprägung
- 21: Innenecke
- 22: Führangsbahn
- 23: Kugel
- 24: Formstück/Walze
- 25: Sicke
- 26: Anschlag

## Patentansprüche

1. Führungsschienenanordnung für einen in wählbaren Längslagen feststellbaren Sitz, insbesondere Kraftfahrzeugsitz, die aus jeweils einer auf jeder Sitzlängsseite angeordneten, an einem Fahrzeugboden festgelegten Führungsschiene (10) und jeweils einer gegenüber dieser verschiebbaren Laufschiene (11) besteht, die einerseits auf Wälzkörpern (16) einer unteren Laufbahn (18) und andererseits über Kugeln (23) an Führungsbahnen (22) der Schienen (10, 11) abgestützt ist, wobei im vorderen und/oder hinteren Bereich wenigstens einer Führungsbahn (22) auf jeder Sitzlängsseite jeweils ein Paar von Kugeln (23) angeordnet ist, zwischen denen ein Formstück (24) mit einem gegenüber dem Durchmesser der Kugeln (23) so geringfügig kleineren Durchmesser plaziert ist, daß infolge belastungsbedingter, elastischer Verformung von Kugeln (23) und Führungsbahn (22) das Formstück (24) vor Überschreitung der Elastizitätsgrenze zum Tragen kommt.

2. Führungsschienenanordnung nach Anspruch 1, **dadurch gekennzeichnet, daß** als Formstück (24) eine sich mit ihrer Achse in Längsrichtung der Führungsbahn (22) erstreckende Walze eingesetzt ist.

3. Führungsschienenanordnung nach Anspruch 1 oder 2, **dadurch gekennzeichnet, daß** der Durchmesser des Formstücks oder der Walze (24) dem 0,970 bis 0,999-fachen des Durchmessers der Kugeln (23) entspricht.

4. Führungsschienenanordnung nach einem der vorhergehenden Ansprüche, **dadurch gekennzeichnet, daß** zur Vermeidung des Austretens von Kugelpaar und Formstück (24) aus den Führungsbahnen (22) Anschläge (26) vorgesehen sind, die von in die Führungsschiene (10) im Bereich ihrer Führungsbahnen (22) eingepreßten Sicken (25) gebildet sind.

5. Führungsschienenanordnung nach einem der vorhergehenden Ansprüche, **dadurch gekennzeichnet, daß** die abstandsweise hintereinander in der Führungsbahn (22) angeordneten Paare von Kugeln (23) mit der je dazwischen plazierten Walze (24) in Endausschnitten einer in der Führungsbahn (22) angeordneten Distanzlamelle fixiert sind.

6. Führungsschienenanordnung nach einem der vorhergehenden Ansprüche, **dadurch gekennzeichnet, daß** jede in eine Führungsschiene (10) eingeschobene Laufschiene (11) zusammen mit der Führungsschiene zwei Führungsbahnen (22) aufweist und jede Führungsbahn (22) von einer oberen, ausgerundeten Innenecke (21) der Führungsschiene (10) und einem aufragenden Schenkel (19) der Laufschiene (11) gebildet ist, wobei der Schenkel (19) an seinem freien Ende eine dem Durchmesser der Kugel (23) angepaßte, ausgerundete Rückprägung aufweist.

## Claims

1. A guide-rail arrangement for a seat, in particular a motor vehicle seat, which may be arrested in selectable longitudinal positions, said arrangement comprising in each case a guide rail (10), which is arranged on each longitudinal seat side and is fixed to a vehicle floor, and in each case a slide rail (11), which may be displaced with respect to said guide rail and is supported on the one hand on rolling bodies (16) of a lower slideway (18) and on the other hand by way of balls (23) on guideways (22) of the rails (10, 11), a pair of balls (23) being arranged in each case on each longitudinal seat side in the front and/or rear region of at least one guideway (22), and a shaped piece (24) being placed between said balls, said shaped piece having a diameter which is slightly smaller than the diameter of the balls (23) such that, as a result of a load-induced elastic deformation of the balls (23) and the guideway (22), the shaped piece (24) comes into effect before the elastic limit is exceeded.

2. A guide-rail arrangement according to Claim 1, **characterised in that** a roller whereof the axis extends in the longitudinal direction of the guideway (22) is used as the shaped piece (24).

3. A guide-rail arrangement according to Claim 1 or 2, **characterised in that** the diameter of the shaped piece or roller (24) corresponds to 0.970 to 0.999 times the diameter of the balls (23).

4. A guide-rail arrangement according to one of the preceding claims, **characterised in that**, to prevent the ball pair and the shaped piece (24) from exiting the guideways (22), stops (26) are provided which are formed by beads (25) pressed into the guide rail (10) in the region of its guideways (22).

5. A guide-rail arrangement according to one of the preceding claims, **characterised in that** the pairs of balls (23), which are arranged one after another at a spacing in the guideway (22) and have the roller (24) placed in each case therebetween, are fixed in position in end cutouts of a distance plate arranged in the guideway (22).

6. A guide-rail arrangement according to one of the preceding claims, **characterised in that** each slide rail (11) which is inserted into a guide rail (10) has, together with the guide rail, two guideways (22), and each guideway (22) is formed by an upper rounded inside corner (21) of the guide rail (10) and a protruding limb (19) of the slide rail (11), the limb (19) having, at its free end, an inverted rounded shaping which is adapted to the diameter of the balls (23).

## Revendications

1. Dispositif de guidage sur rail pour un siège susceptible d'être fixé en des positions longitudinales sélectionnées, en particulier un siège de véhicule automobile, dispositif constitué respectivement d'une glissière de guidage (10) disposée sur chaque côté longitudinal du siège, fixée à un plancher du véhicule, et chaque fois d'une glissière de roulement (11) déplaçable par rapport à celle-ci, qui, est soutenue à une extrémité sur des corps de ruban (16) d'une bande de roulement (18) inférieure et à une autre extrémité par l'intermédiaire de billes (23) sur des bandes de guidage (22) des glissières (10, 11), dans la zone avant et/ou arrière d'au moins une bande de guidage (22) étant disposée sur chaque côté longitudinal du siège chaque fois une paire de billes (23), entre lesquelles est placée une pièce profilée (24) ayant un diamètre légèrement inférieur au diamètre des billes (23), de manière que, par suite d'une déformation élastique, venant de la charge imposée, des billes (23) et de la bande de guidage (22), la pièce profilée (24) vienne à exercer une fonction support avant de dépasser la limite d'élasticité.

2. Dispositif de guidage sur rail selon la revendication 1, **caractérisé en ce qu'**on utilise comme pièce profilée (24) un rouleau qui s'étend avec son axe orienté dans la direction longitudinale de la bande de guidage (22).

3. Dispositif de guidage sur rail selon la revendication 1 ou 2, **caractérisé en ce que** le diamètre de la pièce profilée ou du rouleau (24) correspond à 0,970 à 0,999 fois le diamètre des billes (23).

4. Dispositif de guidage sur rail selon l'une des revendications précédentes, **caractérisé en ce que**, pour éviter la sortie de la paire de billes et de la pièce profilée (24) hors des pistes de guidage (22), sont prévus des butées (26) formés par des moulures (25) creusées par emboutisssage dans la glissière de guidage (10), dans la zone de ses pistes de guidage (22).

5. Dispositif de guidage sur rail selon l'une des revendications précédentes, **caractérisé en ce que** les paires de billes (23), disposées sous un certain espacement les unes derrière les autres dans la piste de guidage (22), avec le rouleau (24) chaque fois placé en position intermédiaire, sont fixées dans des découpures d'extrémité d'une lamelle d'espacement disposée dans la piste de guidage (22).

6. Dispositif de guidage sur rail selon l'une des revendications précédentes, **caractérisée en ce que** chaque glissière de roulement (11) creusée dans une glissière de guidage (10) présente, conjointement avec la glissière de guidage, deux pistes de guidage (22) et chaque piste de guidage (22) est formée par un angle intérieur supérieur (21), arrondi, de la glissière de guidage (10) et une branche (19), en porte à faux, de la glissière de guidage de roulement (11), la branche (19) présentant à son extrémité libre un retrait arrondi adapté au diamètre de la bille (23).
